# EUROPÄISCHE PATENTANMELDUNG

(11) **EP 4 050 137 A1**
(43) Veröffentlichungstag der Anmeldung: **31.08.2022**
(21) Anmeldenummer: 22154158.4
(22) Anmeldetag: 31.01.2022
(51) Int. Cl.: D01G 7/12, D01G 9/20, D01G 13/00, D01G 15/32

(54) **MODUL FÜR EINE FASERVORBEREITUNGSMASCHINE UND FASERVORBEREITUNGSMASCHINE**

(30) Priorität: 26.02.2021 CH 2112021
(71) Anmelder: Maschinenfabrik Rieter AG, 8406 Winterthur (CH)
(72) Erfinder: MEYER, Pascal, 8404 Winterthur (CH); BRAUN, Lukas, 8408 Winterthur (CH)

(57) **Zusammenfassung**

Die Erfindung betrifft ein Modul (1 - 19) für eine Faservorbereitungsmaschine wobei das Modul (1 - 19) quaderförmig ist und eine Länge (L), eine Breite (B) und eine Höhe (H) aufweist, sowie eine Faservorbereitungsmaschine aus einer Vielzahl von Modulen (1-19). Das Modul (1 - 19) weist zumindest zwei in der Breite (B) beabstandete in jeweils einer Ebene angeordnete Seitenwände (20, 22) auf, welche durch zumindest eine Traverse (24, 25) miteinander verbunden sind, wobei die Ebenen der Seitenwände (20, 22) parallel zueinander angeordnet und die Seitenwände (20, 22) jeweils mit einem Rahmen (21, 23) umfasst sind. Ein erster Schenkel (28) des (21, 23) ist in der Ebene der jeweiligen Seitenwand (20, 22) und ein zweiter Schenkel (29) des Rahmens (21, 23) ist jeweils rechtwinklig von der jeweils gegenüberliegenden Seitenwand (20, 22) wegweisend angeordnet.

## Beschreibung

Die Erfindung betrifft ein Modul für eine Faservorbereitungsmaschine sowie eine Faservorbereitungsmaschine aus Modulen.

Im heutigen Maschinenbau werden Maschinen meist mit einem Maschengehäuse, einem Maschinenrahmen oder einem Maschinengestell konstruiert. An diesem Maschinenrahmen werden sämtliche Bauteile oder Elemente der Maschine befestigt und drehfest oder drehbar gehalten. Zudem werden auch Verschalungselemente zum Schutz der Maschinen oder des Bedienpersonals von diesem Maschinenrahmen gehalten. Bedingt durch diese Bauweise hat jeder Maschinentyp seinen eigenen Maschinenrahmen. Dabei können zwar in einem Maschinenrahmen verschiedene Befestigungen vorgehsehen sein um zusätzliche oder optionale Elemente in den Maschinenrahmen einzubauen, grundsätzlich kann jedoch die Maschine nicht ohne grösseren Aufwand erweitert werden respektive zu einem anderen Maschinentyp umgebaut werden. Ebenfalls werden bei grösseren Maschinen deren Maschinenrahmen für einen Transport auseinandergebaut und anschliessend wieder zusammengesetzt, wobei meist eine komplizierte Verbindung zur Gewährleistung der Funktionstüchtigkeit der Maschine und einem einwandfreien Zusammenwirken der Maschinenkomponenten vorgesehen wird. Auch ist eine Bauweise von Maschinen in einzelnen Maschinenmodulen aus dem Stand der Technik bekannt. Dabei wird eine Maschine aus verschiedenen Modulen zusammengesetzt, wobei auch unterschiedliche Module an gleicher Stelle für verschiedene Funktionen eingesetzt werden. Ein Aufbau der Module ist jedoch auf die jeweilige Funktion der Einbauten abgestimmt. Dadurch bilden die Module abgeschlossene Funktionseinheiten, welche untereinander ausgetauscht werden können.

In einer Faservorbereitungsanlage in einer Spinnerei werden angelieferte Fasern respektive Faserflocken für die Verwendung in einer Spinnmaschine vorbereitet. In einer Faservorbereitungsanlage durchlaufen die für die Spinnerei vorzubereitenden Fasern mehrere Verarbeitungsstufen. In einer ersten Stufe werden die Fasern in Form von Faserflocken aus Faserballen herausgelöst. Hierfür finden meist sogenannte Ballenöffner Verwendung. Über eine pneumatische Flockenförderung werden diese Faserflocken aus dem Ballenöffner herausgebracht und beispielsweise an eine nachfolgende Reinigungsmaschine verbracht. In den weiteren Stufen weist die Faservorbereitungsanlage eine Abfolge von Reinigungs-, Speichermaschinen und Mischmaschinen auf, welche von den Fasern respektive Faserflocken durchlaufen werden. Die Faservorbereitungsmaschinen sind dabei in ihrer Abfolge und Bauart auf die zu verarbeitenden Fasern abgestimmt und dienen der Reinigung, Mischung und der Auflösung der Faserflocken in Einzelfasern sowie deren Parallelisierung. Die Anordnung der einzelnen Maschinen in einer Faservorbereitungsanlage kann verschieden ausgeführt sein, dies ist unter anderem abhängig vom zu verarbeitenden Rohstoff und dem zu erzielenden Produkt. Weiter sind auch die einzelnen Faservorbereitungsmaschinen in ihrem Aufbau auf den zu verarbeitenden Rohstoff und das zu erzielende Produkt abgestimmt. Auch unterscheiden sich die Faservorbereitungsmaschinen je nach Produktionshöhe, welche in einer Faservorbereitung erreicht werden soll. Als Faservorbereitungsmaschinen kommen dabei beispielsweise Grobreiniger, Feinreiniger, Fremdteilabscheider, Speicher, Mischer wie auch Karden oder Krempel zum Einsatz. Aufgrund der Abmessungen von Faservorbereitungsmaschinen ist eine Bauweise der gesamten Maschine mit einer in sich ausgesteiften Konstruktion, welche als einsatzbereite Maschine transportierbar ist, nicht möglich. Eine derartige Konstruktionsweise wird beispielsweise, wie in der DE 10 2016 109 535 A1 beschrieben, bei Strecken angewendet. Dahingegen übersteigen die Abmessungen von Faservorbereitungsmaschine die Grössen der für einen Transport üblicherweise zur Verfügung stehenden Container bei weitem.

Eine Vereinfachung der Konstruktion wurde in der GB 591,540 A vorgeschlagen, dabei sind einheitliche Wandelemente verwendet worden, welche mit Winkeleisen zusammengefügt wurden. Anschliessend wurden die Seitenwände mit Traversen gegeneinander versteift und die oberen Deckbleche aufgebracht. In den Seitenwänden sind den notwendigen Einbauten entsprechende Öffnungen vorgesehen. Ist die Maschine einmal aufgebaut, können die normierten Seitenwände nicht ersetzt oder verändert werden, ohne die Stabilität der Maschine zu gefährden.

Nachteilig an bekannten Bauweisen ist, dass der Aufbau einer Faservorbereitungsmaschine an ihrem Einsatzort oder auch eine spätere Erweiterung respektive Vergrösserung oder Verkleinerung der Faservorbereitungsmaschine aufwändig ist. Weiter sind bei einem heute bekannten modularen Aufbau aufgrund der Bildung von modularen Funktionseinheiten die Abmessungen der einzelnen Module auf deren Funktion angepasst. Dies hat den Nachteil, dass keine normierte Erweiterung möglich ist.

Die Aufgabe der Erfindung ist es demnach eine Vorrichtung zu schaffen, welche einen einfachen Aufbau von Maschinenmodulen ermöglicht und durch seine Normierung einer einheitlich modularen Bauweise von Faserverarbeitungsmaschinen förderlich ist.

Die Aufgabe wird gelöst durch eine Vorrichtung mit den Merkmalen des unabhängigen Anspruchs.

Zur Lösung der Aufgabe wird ein neuartiges Modul für eine Faservorbereitungsmaschine vorgeschlagen, wobei das Modul quaderförmig ist und eine Länge, eine Breite und eine Höhe aufweist. Das Modul ist als selbsttragendes Element ausgebildet und weist zumindest zwei in der Breite beabstandete in jeweils einer Ebene angeordnete Seitenwände auf, welche durch zumindest eine Traverse miteinander verbunden sind, wobei die Ebenen der Seitenwände parallel zueinander angeordnet und die Seitenwände jeweils mit einem Rahmen umfasst sind. Ein erster Schenkel des Rahmens ist in der Ebene der jeweiligen Seitenwand und ein zweiter Schenkel des Rahmens ist jeweils rechtwinklig von der jeweils gegenüberliegenden Seitenwand wegweisend angeordnet. Durch diese Bauweise der einzelnen Module wird eine Normierung erreicht, welche eine Vereinfachung im Zusammenbau der Module ermöglicht. Weiter wird ein stabiles und selbsttragendes Element geschaffen, welches in seinem Grundaufbau zur einfachen Gestaltung verschiedenster Module verwendet werden kann. Durch die Rahmen werden die Seitenwände einerseits stabilisiert und andrerseits ist eine Aneinanderreihung oder ein Stapeln der Module möglich da die Rahmen eine feste Auflage bilden. Unter einem selbsttragenden Element ist zu verstehen, dass das derart gestaltete Module ohne eine ergänzende Verstärkung oder Transporthilfe bewegt oder angehoben werden kann. Das Modul kann an vorbestimmten Positionen ergriffen und bewegt werden. Ein als selbsttragendes Element ausgebildetes Modul ist in sich stabil und derart Verwindungssteif, dass bei Transport und Montage keine Verformungen oder Formänderungen eintreten.

Die Rahmen sind mit der Seitenwand zumindest teilweise verbunden oder werden teilweise durch die Seitenwand selbst gebildet. Beispielsweise können einfache Winkeleisen (gleichschenklig oder nicht gleichschenklig) von einer Seite auf die Seitenwand aufgebracht und mit dieser verschraubt, verschweisst oder verklebt werden. In einer alternativen Ausführung bildet die Seitenwand selbst den ersten Schenkel, wobei der zweite Schenkel durch einen orthogonal auf die Seitenwand aufgebrachten Flachstahl gebildet wird. Dabei kann der Flachstahl gegen die Seitenwand mit zusätzlichen Rippen abgestützt werden. Dabei bietet sich eine Verbindung durch Schweissen oder Kleben an. In einer weiteren alternativen Ausführung wird ein Winkeleisen nicht auf die Seitenwand aufgebracht, sondern stumpf an die Aussenkante der Seitenwand angeschweisst. Weiter ist auch die Verwendung von U-Profilen als Rahmen denkbar. In allen Variationen können aufgrund hoher Belastungen zusätzliche Verbindungsmittel oder eine entsprechende Verrippung in die Seitenwand eingebracht werden. Auch ist die Stärke der Seitenwand und der Rahmen aufgrund der vorgesehenen Einbauten oder einer abzusehenden Flächenbelastung zu wählen. Beispielsweise kann bei einer eingebauten Walze eine durch eine Verstärkung der Seitenwand oder angebrachte Rippen eine gleichmässige Krafteinleitung der Lager- und Antriebskräfte in die Seitenwand erreicht werden.

Die Verbindung von zwei Seitenwänden mit zumindest einer Traverse stellt sicher, dass jeweils zwei Seitenwände mit jeweils ihrem Rahmen ein Modul mit einer bestimmten Breite bilden. Die Länge und die Höhe eines Moduls werden durch die Abmessungen der Seitenwände respektive die Rahmen bestimmt. Länge und Breite eines Moduls können abhängig von den Einbauten oder dem Verwendungszweck von Modul zu Modul verschieden sein. Beispielsweise kann ein Grundmodul auf welchem die Maschine aufgebaut wird eine geringere Höhe aufweisen als ein Modul, welches einen Teil eines Speichers bildet.

Die Module müssen nicht zwingend aus einem Material wie beispielsweise Stahl hergestellt werden. Die vorgeschlagene Konstruktion in Form eines selbsttragenden Elements ermöglicht eine Kombination von Materialien. Die Seitenwände können aus Kunststoff und die Rahmen aus Stahl gefertigt sein. Bei einfachen Abschlussmodulen welche einer geringen statischen oder dynamischen Belastung ausgesetzt sind können auch Rahmen und Seitenwand aus Kunststoff hergestellt werden, dabei besteht auch die Möglichkeit einer einstückigen Ausbildung.

Vorteilhafterweise ist der Rahmen durch einen Flachstahl oder ein Winkeleisen oder ein U-Profil gebildet. Die Rahmen sind mit der Seitenwand zumindest teilweise verbunden oder werden teilweise durch die Seitenwand selbst gebildet. Beispielsweise können einfache Winkeleisen (gleichschenklig oder nicht gleichschenklig) von einer Seite auf die Seitenwand aufgebracht und mit dieser verschraubt, verschweisst oder verklebt werden. In einer alternativen Ausführung bildet die Seitenwand selbst den ersten Schenkel, wobei der zweite Schenkel durch einen orthogonal auf die Seitenwand aufgebrachten Flachstahl gebildet wird. Dabei kann der Flachstahl gegen die Seitenwand mit zusätzlichen Rippen abgestützt werden. Dabei bietet sich eine Verbindung durch Schweissen oder Kleben an. In einer weiteren alternativen Ausführung wird ein Winkeleisen nicht auf die Seitenwand aufgebracht, sondern stumpf an die Aussenkante der Seitenwand angeschweisst. Weiter stellt auch die Verwendung von U-Profilen zur Bildung des Rahmens eine alternative Ausführungsform dar. In einer derartigen Konstruktion ist ein erster Schenkel des U-Profils in der Ebene der jeweiligen Seitenwand oder auf der Seitenwand aufgesetzt, ein zweiter Schenkel des U-Profils ist rechtwinklig von der jeweils gegenüberliegenden Seitenwand weg weisend angeordnet und ein dritter Schenkel ist wiederum parallel zur Ebene der jeweiligen Seitenwand angeordnet.

In allen Variationen können aufgrund hoher Belastungen zusätzliche Verbindungsmittel oder eine entsprechende Verrippung in die Seitenwand eingebracht werden. Auch ist die Stärke der Seitenwand und der Rahmen aufgrund der vorgesehenen Einbauten oder einer abzusehenden Flächenbelastung zu wählen. Beispielsweise kann bei einer eingebauten Walze eine durch eine Verstärkung der Seitenwand oder angebrachte Rippen eine gleichmässige Krafteinleitung der Lager- und Antriebskräfte in die Seitenwand erreicht werden.

Bevorzugterweise ist die zumindest eine Traverse durch ein Winkeleisen oder ein Rohr oder ein Blech oder eine Walze gebildet. Im Sinne der Anmeldung sind alle Einbauten zwischen den Seitenwänden eines Moduls welche die beiden Seitenwände verbinden unter dem Begriff Traverse zu verstehen. Beispielsweise können in einem Modul Leitbleche für einen Faserstrom vorgesehen sein welche an einem Winkeleisen befestigt sind, wobei das Winkeleisen wiederum an den Seitenwänden gehalten ist. Oder das Modul enthält eine Walze, beispielsweise eine Nadelwalze zur Bearbeitung von Fasergut, und die Walze ist jeweils in den Seitenwänden in einem Lager drehbar gehalten. Ebenfalls sind beispielsweise zwischen den Seitenwänden eingefügte Bleche wie ein Bodenblech oder eine Rückwand eingefügt. Diese Elemente wie beispielsweise Bleche, Walzen oder Supporte dienen als Traverse dadurch, dass sie die Seitenwände eines Moduls miteinander verbinden und damit eine Breite des Moduls festlegen. Zusätzlich wird durch die Einbauten eine Stabilität und Verwindungssteifheit des Moduls erreicht, welche für Transport und Montage jedes einzelne Modul als selbsttragendes Element aufweisen muss.

Es hat sich gezeigt, dass bei Betrachtung der heute gebräuchlichen Anlagenleistungen das Modul bevorzugterweise eine Breite von 1200 bis 1800 mm aufweist. Dabei ist die genannte Breite als lichte Weite zwischen den Seitenwänden und als Richtwert zu verstehen. Je nach Fabrikat respektive Hersteller kann die Breite der Module auch geringfügig im Bereich von weniger als 100 mm abweichen. Durch die Beschränkung der Breite auf nur zwei Grössen kann eine Vielfalt der notwendigen Module eingeschränkt werden. Dies führt dazu, dass mehrfach gleichartige Module in verschiedenen Faservorbereitungsmaschinen verwendet werden können, was wiederum zu einer Reduzierung der Herstellkosten führt. Beispielsweise kann ein Grundmodul welches ein Bodenblech wie auch eine Rückwand aufweist nicht nur für eine Faservorbereitungsmaschine verwendet, sondern als unterstes Eck-Modul für verschiedene Ausführungen von Faservorbereitungsmaschinen eingesetzt werden. Für die Dimensionierung der Blechdicken für die Seitenwände ist ein Bereich von 1 mm bis 6 mm zu bevorzugen, aus welchem je nach Anwendung oder Einbauten eine entsprechende Auswahl getroffen wird. Eine eher dickere Seitenwand kommt zum Einsatz bei einer Vielzahl von Einbauten.

Vorteilhafterweise sind einander angrenzende Module in der Breite und in der Höhe oder in der Breite und in der Länge gleich. Die Breite der Module bestimmt die Breite der Faservorbereitungsmaschine. Durch eine weitergehende Normierung der Länge oder der Höhe zusätzlich zur einheitlichen Breite wird eine Kompatibilität der verschiedenen Module erhöht. Dies hat den Vorteil, dass bei einem Umbau einer Faservorbereitungsmaschine, sei dies aufgrund von notwendigen Erweiterungen oder einem Modulaustausch zur Einführung technischer Neuerungen, keine Spezialmodule notwendig sind, sondern eine einfache Standradversion verwendet werden kann. Es hat sich herausgestellt, dass eine Länge von 1000 mm bis 1500 mm sowie eine Höhe von 1000 mm bis 1500 mm für Grundmodule und eine Höhe von 350 mm bis 1000 mm für andere Module in den meisten Fällen vorteilhaft sind. Besonders zu bevorzugen ist eine Länge von 1110 mm und eine Höhe eines Drittels (370 mm) oder zwei Dritteln (740 mm) der Länge.

Bevorzugterweise sind zur Verbesserung eines Faserflusses Module, welche einen Schacht bilden in der Breite 50 mm bis 100 mm schmaler als die angrenzenden Module. Dies kann realisiert werden durch eine entsprechende Vergrösserung der Rahmen dieser Module sodass diese wiederum mit den umgebenden Modulen kompatibel sind. Es ist jedoch alternativ auch eine entsprechend engere Anordnung der Seitenwände gegeneinander oder ein Einsetzen eines Führungs- oder Leitblechs möglich.

Vorteilhafterweise weist ein für den Einbau in einer Fasertransportrichtung vorgesehenes und damit die Faservorbereitungsmaschine abschliessendes Modul eine Rückwand auf. Durch eine derartige Ausgestaltung der entsprechenden Module wird eine Verschalung der Faservorbereitungsmaschine direkt in die Module integriert und erübrigt sich in Form eines separaten Bauteils. Die gleiche Vorgehensweise ist bei Modulen anzuwenden, welche die Faservorbereitungsmaschine nach oben abschliessen. Bei diesen Abschlussmodulen ist es von Vorteil, wenn ein Deckblech in das Modul integriert wird, sodass eine anschliessende Überdachung der Faservorbereitungsmaschine nicht mehr notwendig ist.

Bevorzugterweise ist der zweite Schenkel des Rahmens staubdicht mit der jeweiligen Seitenwand verbunden. Diese Ausführung einer Verbindung zwischen dem Rahmen und der Seitenwand ermöglicht den Verzicht auf eine zusätzliche staubdichte Verschalung der Faservorbereitungsmaschine. Ebenfalls können durch eine entsprechende Anordnung der Module allein staubdichte Speicher oder Bearbeitungsräume in der Faservorbereitungsmaschine geschaffen werden und auf weitere aufwändige Einbauten verzichtet werden. Auch können die Seitenwände der Module an entsprechenden Stellen mit Sichtöffnungen oder transparenten Bereichen versehen werden. Eine staubdichte oder in einer Weiterführung der Erfindung luftdichte Verbindung zwischen dem Rahmen und der Seitenwand kann beispielsweise durch eine durchgehende Schweissung oder das Einlegen einer Dichtung erreicht werden. Bei einer Herstellung aus Kunst- oder Verbundstoffen kann eine staubdichte Verbindung zwischen dem Rahmen und der Seitenwand durch eine einstückige Ausführung erreicht werden.

Bevorzugterweise ist für einen Transport des Moduls zumindest ein Hebebalken vorgesehen. Am Hebebalken sind Platten und Gewindelöcher zur Befestigung des Hebebalkens an den Rahmen des Moduls angebracht und Aufnahmen für eine Gabel eines Gabelstaplers und/oder Schlingen oder Seile für einen Transport mit einem Kran vorgesehen. Durch den Einsatz eines auf die Module abgestimmten Hebebalkens wird vermieden, dass bei unsachgemässer Handhabung der Module Schäden entstehen, beispielsweise ein Verziehen der Module oder eine Ausbeulung an Hebepunkten. Der Hebebalken überspannt ein Modul in seiner Länge und stellt die notwendigen Mittel für die verwendeten Hebemittel zur Verfügung. Der Hebebalken wird an einem Modul angelegt, wobei der Hebebalken auf den Schenkeln der beidseitigen Rahmen des Moduls zur Anlage kommt. Auf einer dem Hebebalken gegenüberliegenden Seite der Schenkel wird die Platte angebracht und beispielsweise mit Ringschrauben durch Öffnungen im Rahmen mit dem Hebebalken verschraubt. Durch die Verwendung einer Platte wird eine Verteilung der Kräfte im Schenkel des Rahmens erreicht. Alternativ zur Kombination von Platten und Ringschrauben können auch Schnellverschlüsse verwendet werden, beispielsweise Drehverschlüsse, welche nach Auflegen des Hebebalkens auf ein Modul unter dem Schenkel des Rahmens des Moduls geschwenkt und gesichert werden können. Auch andersartige aus dem Stand der Technik bekannte und in der Logistik zur Anwendung kommende Schnellverschlüsse können eingesetzt werden. Vorteilhafterweise ist der Hebebalken in Leichtbauweise mit über die Länge des Hebebalkens verteilten Aussparungen vorgesehen und mit Handgriffen für eine einfache manuelle Handhabung versehen.

Weiter wird eine Faservorbereitungsmaschine vorgeschlagen aus einer Vielzahl von Modulen nach der vorangehenden Beschreibung, wobei die sich gegenüberliegenden zweiten Schenkel der Rahmen der aneinander angrenzenden Module jeweils miteinander verbunden sind. Da die einzelnen Module als selbsttragende Element ausgebildet sind, ist eine über die Verbindung der Rahmen hinausgehende Vernetzung oder Versteifung der verbundenen Module nicht notwendig. Dadurch dass die Module gegenseitig nur über deren Rahmen verbunden sind, ist eine einfache und schnelle Montage möglich. Gleichzeitig wird durch die Rahmenkonstruktion eine hohe Stabilität der gesamten Faservorbereitungsmaschine erreicht. Durch einen einfachen Umbau aufgrund dieser Modulbauweise ist es möglich den Aufbau einer Faservorbereitungsmaschine auf dessen Einsatz abzustimmen und bei einer Änderung der Produktionsbedingungen auf einfache Weise zu ändern. Beispielsweise kann eine Produktionserhöhung durch den Einbau weiterer Module zur Vergrösserung eines Speichers einer Faservorbereitungsmaschine erreicht werden.

Bevorzugterweise entspricht eine Arbeitsbreite der Faservorbereitungsmaschine der Breite eines Moduls. Faservorbereitungsmaschinen werden mit Fasergut meist in einer Hauptrichtung durchströmt, das Fasergut wird innerhalb der Faservorbereitungsmaschine zwischen einem Eintritt und einem Austritt bearbeitet. In dieser Bearbeitungsrichtung gesehen wird von einer Arbeitsbreite gesprochen. Entspricht die Breite der Module der Arbeitsbreite der Faservorbereitungsmaschine hat dies den Vorteil, dass die Seitenwände der Module auch die seitliche Begrenzung der Faservorbereitungsmaschine darstellen.

Vorzugsweise ist die Verbindung der sich gegenüberliegenden zweiten Schenkel der Rahmen der aneinander angrenzenden Module eine Klemmverbindung. Alternativ ist die Verbindung eine Schraubverbindung oder eine Schweissverbindung. Durch eine Klemmverbindung welche beispielsweise gleichzeitig eine Positionierhilfe darstellt ist eine einfache und rasche Montage der Module möglich. Bei einer Klemmverbindung werden die beiden Rahmen mit Hilfe von Schraub- oder Federverbindungen gegeneinandergedrückt und derart zwischen Klemmelementen in ihrer Position gehalten, wobei ein Klemmelement durch den einen Rahmen gebildet werden kann. Alternativ können die Rahmen auch einfach mit Gewindebolzen zusammengeschraubt oder zumindest teilweise verschweisst werden. Weiterführend kann eine Klemm- oder Schraubverbindung auch durch eine teilweise zusätzliche Schweissung gesichert werden.

Bevorzugterweise ist die Klemmverbindung clipsartig mit verrastenden Verbindungselementen ausgebildet. Bei einer clipsartigen Verbindung sind an den jeweiligen Rahmen Vorrichtungen vorgesehen, welche gegenseitig einrasten, wenn sie gegeneinandergepresst werden. Durch ein Aufsetzen eines Moduls auf ein darunter oder daneben liegendes Modul werden die Verbindungen aktiviert und die Module gegeneinander verspannt. Weiter sind auch Clips-Verbindungen möglich, welche als separate Vorrichtungen durch dafür vorgesehene Öffnungen in den Rahmen der Module eingefügt werden können. Clipsartig bedeutet, dass eine Verbindung von zwei Elementen hergestellt werden kann durch ein einfaches Zusammenfügen der Elemente ohne, dass ein weiterer Arbeitsschritt wie beispielsweise Verschrauben notwendig ist.

Vorteilhafterweise ist die Verbindung zwischen den zweiten Schenkeln der Rahmen der aneinander angrenzenden Module mit einer Dichtung versehen. Durch die Verwendung einer Dichtung wird ein staubdichter Raum auch Modulübergreifend möglich. Mit einer Dichtung kann auch auf einfache Weise eine Fertigungsungenauigkeit in der Ebenheit sich gegenüberliegender Rahmen unterschiedlicher Module ausgeglichen werden.

Alternativ ist eine Vorrichtung mit Verbindungselementen zur Verbindung und Positionierung der Module vorgesehen, wobei ein erstes Modul in seinem Rahmen eine Öffnung zur Aufnahme eines Verbindungselements aufweist und ein zweites Modul in seinem Rahmen ein Befestigungsloch sowie zwei um das Befestigungsloch um mindestens 45 Winkelgrade zueinander versetzte Positionierrasten aufweist In einer Montagestellung ist das Verbindungselement in einer ersten Position in der ersten Positionierraste mit dem zweiten Modul im Befestigungsloch drehfest verschraubt und in einer Betriebsstellung ist das Verbindungselement in einer zweiten Position in der zweiten Positionierraste mit dem zweiten Modul im Befestigungsloch drehfest verschraubt. In der Betriebsstellung ist das erste Modul mit dem zweiten Modul verbunden durch eine Verspannung des Rahmens des ersten Moduls zwischen dem Verbindungselement und dem Rahmen des zweiten Moduls.

Vorteilhafterweise ist das Verbindungselement kegelförmig ausgebildet, wobei ein Querschnitt des Verbindungselements in eine Richtung gegen das erste Modul verjüngt ausgebildet ist. Die kegelförmige Ausbildung des Verbindungselementes erleichtert eine gegenseitige Positionierung der zu verbindenden Module. Es kann dadurch auf weitere Positionierhilfen wie Positionierstifte oder Einlaufwinkel verzichtet werden. Auch kann die Öffnung zur Aufnahme des Verbindungselementes im Rahmen des ersten Moduls exakt auf den grössten Querschnitt des Verbindungselementes eingestellt werden, sodass ein exakter Zusammenbau der Module möglich wird ohne dass ein millimetergenaues Positionieren der Module vor der eigentlichen Montage vorgesehen werden muss. Auf diese Weise können einfache Hebemittel verwendet werden, um die Module zusammenzubauen. Das Verbindungselement ist ortsfest auf dem zweiten Modul befestigt, sodass nur der schmale Teil des kegelförmigen Verbindungselements in die Öffnung des ersten Moduls eingefügt werden muss und anschliessend durch den sich verjüngenden Querschnitt des Verbindungselements das erste Modul bei weiterer Annäherung an das zweite Modul in die exakte Position geführt wird.

Durch die Positionierrasten wird eine Vormontage des Verbindungselements am Rahmen des zweiten Moduls vereinfacht. Das Verbindungselement kann ohne Messmittel aufgrund der Positionierraste in der exakten Position mit dem Rahmen des zweiten Moduls verschraubt werden. Bevorzugterweise sind die Positionierrasten in Form von Vertiefungen oder Durchgangslöchern im Rahmen des zweiten Moduls ausgebildet. Entsprechend der relativen Position der Positionierraste in Bezug zum Befestigungsloch ist im Verbindungselement ein passendes sich in die Vertiefung einfügendes Gegenstück vorgesehen. Bevorzugterweise ist im Verbindungselement eine Positionierschraube vorgesehen, welche in die Positionierraste im Rahmen des zweiten Moduls eingreift.

Eine um 90 Winkelgrade versetzte Anordnung der Positionierrasten hat den Vorteil, dass für das Verbindungselement eine längliche Form ausreicht. Durch eine längliche Ausformung des Verbindungselementes wird bei seiner Drehung um 90 Winkelgrade eine optimale Ausnutzung einer auf den Rahmen des ersten Moduls zu liegen kommende Anpressfläche erreicht.

Besonders bevorzugt weist das Verbindungselement einen rechteckigen Querschnitt auf. Eine annähernd rechteckige Form hat gegenüber einer beispielsweise ovalen oder dreieckigen Form den Vorteil, dass ein Verhältnis der Grösse der Öffnung zur Aufnahme des Verbindungselementes zur Auflagefläche nach Verdrehung des Verbindungelementes vorteilhaft ist. Mit einer möglichst kleinen Öffnung wird eine grösstmögliche Auflagefläche erreicht.

Vorteilhafterweise ist das Verbindungselement in seiner zweiten Position mit einer Sicherung in Form einer Verklebung oder Verschweissung versehen. Dadurch wird ein Lösen der Verbindung der beiden Module durch Erschütterungen oder betriebsbedingte Vibrationen der Maschine verhindert und eine sichere Verbindung gewährleistet.

Für eine vorteilhafte Handhabung weisen die Verbindungselemente ein Innengewinde auf und zur Befestigung im Befestigungsloch im Rahmen des zweiten Moduls ist ein Gewindebolzen vorgesehen. Denkbar ist auch die Verwendung eines federbelasteten Schnappverschlusses. Dabei würde das Verbindungselement nach dem Aufsetzen des ersten Moduls auf das zweite Modul entgegen der Federkraft vom Rahmen des zweiten Moduls abgehoben und nach der Verdrehung auf den Rahmen des ersten Moduls aufgesetzt. Die Anpresskraft und damit die Stärke der Befestigung würden in diesem Fall durch die Federkraft bestimmt. Aufgrund einer möglichen Ermüdung der Feder ist jedoch eine Verschraubung des Verbindungselements mit dem Rahmen des zweiten Moduls zu bevorzugen.

Zur weiteren Vereinfachung des Zusammenbaus respektive der Aufstellung des Grundmoduls ist es von Vorteil, wenn am Rahmen des zweiten Moduls anstelle der Befestigungslöcher Schweissmuttern angebracht sind und die Verbindungselemente mit den Gewindebolzen zur Aufstellung des Moduls auf einem Fundament vorgesehen sind. Wird das unterste Modul durch das zweite Modul gebildet so kann bei der vorgeschlagenen Bauweise mit einer Schweissmutter das Verbindungselement auch als ein in der Höhe einstellbarer Maschinenfuss genutzt werden.

Im Folgenden wird die Erfindung anhand von einer beispielhaften Ausführungsform erklärt und durch Zeichnungen näher erläutert. Es zeigen
- Figur 1: eine schematische Darstellung eines Moduls in einer ersten Ausführungsform;
- Figur 2: eine schematische Darstellung eines Moduls in einer zweiten Ausführungsform;
- Figur 3a-d: eine schematische Darstellung eines Querschnittes an der Stelle X eines Moduls nach der Figur 1 in drei alternativen Ausbildungen;
- Figur 4: eine schematische Darstellung eines beispielhaften Aufbaus mehrerer Module;
- Figur 5: eine schematische Darstellung einer Faservorbereitungsmaschine aus Modulen
- Figur 6: eine schematische Darstellung einer Modulverbindung in der Montagestellung;
- Figur 7: eine schematische Darstellung einer Modulverbindung im Übergang von einer Montagestellung in eine Betriebsstellung;
- Figur 8: eine schematische Darstellung einer Modulverbindung in der Betriebsstellung;
- Figur 9: eine schematische Darstellung einer Draufsicht in Richtung X einer Modulverbindung in der Betriebsstellung nach der Figur 8;
- Figur 10: eine schematische Darstellung einer Modulaufstellung;
- Figur 11: eine schematische Darstellung einer Zusammenstellung mehrerer Module und
- Figur 12: eine schematische Darstellung eines Hebebalkens.

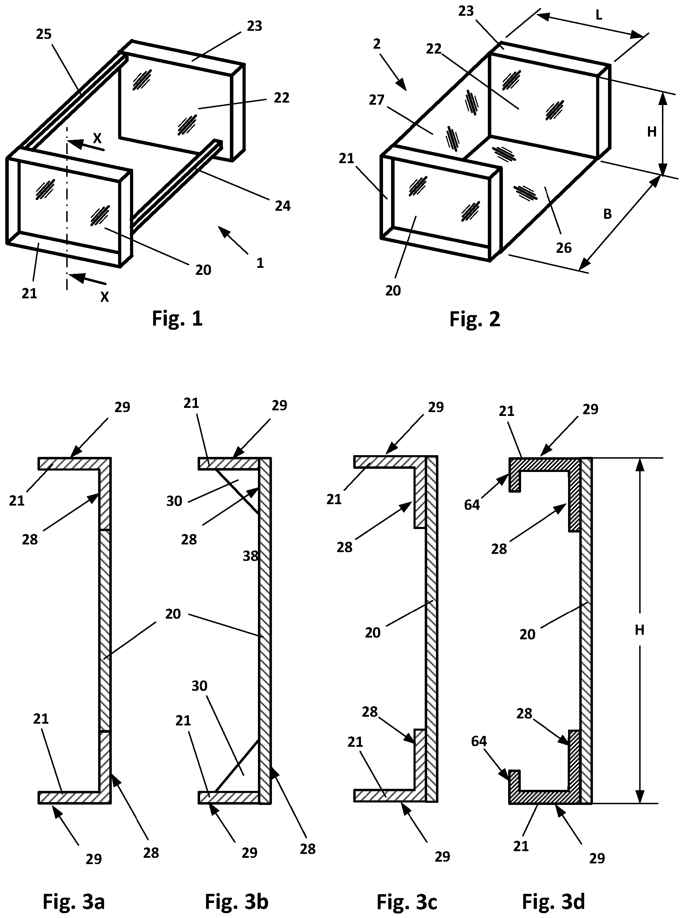

Figur 1 zeigt eine schematische Darstellung eines Moduls 1 in einer ersten Ausführungsform. Das Modul 1 ist in seiner Grundausführung aufgebaut aus zwei voneinander beabstandet angeordneten Seitenwänden 20 und 22. Die Seitenwände 20 und 22 sind mit Traversen 24 und 25 miteinander verbunden. Die Seitenwände 20 und 22 sind jeweils mit einem Rahmen 21 respektive 23 umfasst. Die Rahmen 21 und 23 sind jeweils auf einer der gegenüberliegenden Seitenwand 20 und 22 abgewandten Seite auf respektive an der Seitenwand 20 und 22 angebracht.

Figur 2 zeigt eine schematische Darstellung eines Moduls 2 in einer zweiten Ausführungsform. Die Ausführung der Grundelemente des Moduls 2, nämlich der mit einem Rahmen 21 und 23 versehenen Seitenwände 20 und 21, ist mit der Ausführung nach der Figur 1 identisch. Die die Seitenwände 20 und 22 verbindende Traverse ist in der gezeigten Ausführung gebildet durch eine Rückwand 27 und ein Bodenblech 26. Durch das Einfügen der Rückwand 27 und des Bodenblechs 26 wird ein Abstand zwischen den Seitenwänden 20 und 22 festgelegt welcher einer Breite B des Moduls 2 entspricht. Die Abmessungen der Seitenwände 20 und 22 sind identisch und bestimmen die Länge L des Moduls 2 und die Höhe H des Moduls 2.

Die Figuren 3a bis 3d zeigen eine schematische Darstellung eines Querschnittes an der Stelle X eines Moduls nach der Figur 1 in vier alternativen Ausführungen. In allen vier Ausführungen sind eine Seitenwand 20 und der zugehörige Rahmen 21 gezeigt. Die gezeigten Ausführungen der Rahmenkonstruktion können auch gemischt an einem Modul genutzt werden.

In Figur 3a ist der Rahmen 21 aus einem gleichschenkligen Winkeleisen mit einem ersten Schenkel 28 und einem zweiten Schenkel 29 gebildet. Das Winkeleisen ist auf die Seitenwand 20 aufgesetzt und mit dieser verbunden, beispielsweise verschweisst. Dabei bildet er erste Schenkel 28 einen Teil der Seitenwand 20 und die eigentliche Seitenwand 20 ist gegenüber den Ausführungen nach Figur 3b und 3c verkürzt ausgebildet. Die Höhe H des Moduls wird durch die Seitenwand und den ersten Schenkel 28 des Rahmens 21 erreicht.

In Figur 3b hingegen ist der Rahmen 21 gebildet aus einem Flachstahl und einem Teil der Seitenwand 20. Der erste Schenkel 28 wird durch einen äusseren Teil der Seitenwand 20 gebildet und der zweite Schenkel 29 entspricht dem Flachstahl. Der Flachstahl, respektive der zweite Schenkel 29, ist mit der Seitenwand 20 verbunden, beispielsweise verschweisst. Zur Erhöhung der Stabilität sind Rippen 30 vorgesehen, welche den Flachstahl auf der Seitenwand 20 abstützen. Die Dimension der Seitenwand 20 entspricht in dieser Ausführung der Höhe H des Moduls.

In einer weiteren Alternative nach der Figur 3c ist der Rahmen 21 in Form eines Winkeleisens mit einem ersten Schenkel 28 und einem zweiten Schenkel 29 ausgebildet. Das Winkeleisen ist seinem ersten Schenkel 28 auf die Seitenwand 20 aufgesetzt und mit dieser verbunden, beispielsweise verschweisst, wobei in dieser Ausführung auch eine Schraubverbindung möglich ist. Die Dimension der Seitenwand 20 entspricht in dieser Ausführung der Höhe H des Moduls.

In einer weiteren alternativen Ausführungsform nach der Figur 3d ist der Rahmen 21 in Form eines U-Profils auf die Seitenwand 20 aufgesetzt, welches einen ersten Schenkel 28 und einen zweiten Schenkel 29 bildet. Durch das U-Profil wird ein an den zweiten Schenkel 29 anschliessender dritter Schenkel 64 gebildet. In einer leicht abgewandelten Form kann der erste Schenkel 28 des U-Profils auch in die Ebene der Seitenwand 20 verlegt werden, wie dies in Figur 3a am Beispiel des Winkeleisens gezeigt ist. Abgesehen von einer erhöhten Steifigkeit des Rahmens 20 aufgrund der Verwendung des U-Profils ergibt sich auch eine einfache Möglichkeit beispielsweise eine Tür am Rahmen zu befestigen. Die Dimension der Seitenwand 20 entspricht in dieser Ausführung der Höhe H des Moduls. Weitere Ausführungen beispielsweise in einer einstückigen Form von Seitenwand 20 und Rahmen 21 sind denkbar.

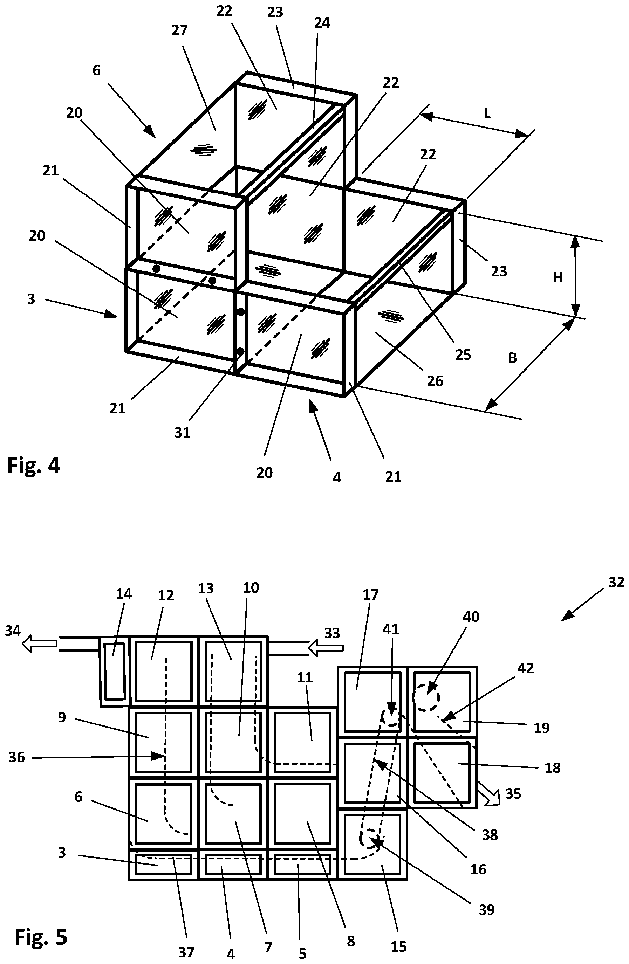

Figur 4 zeigt eine schematische Darstellung eines beispielhaften Aufbaus mehrerer Module 3, 4 und 6. Allen gezeigten Modulen 3, 4 und 6 gemeinsam ist der grundsätzliche Aufbau aus zwei mit jeweils einem Rahmen 21, 23 versehenen Seitenwänden 20, 22, welche mit zumindest einer Traverse verbunden sind. Auch weisen die Module 3, 4 und 6 jeweils die gleichen Abmessungen wie Breite B, Höhe H und Länge L auf. Die Verbindung mit zumindest einer Traverse der Seitenwände 20 und 22 ist in Modul 3 mit einem Bodenblech 26 und einer Rückwand 27, in Modul 4 mit einer Rückwand 27 und einem Winkeleisen 24 und in Modul 6 mit einem Winkeleisen 25 und einem Bodenblech 26 ausgebildet. Die Module 3, 4 und 6 sind nebeneinander und übereinander angeordnet und jeweils mit einer Verbindung 31 gekoppelt. Die als selbsttragende Element ausgebildeten und derart verbundenen Module 3, 4 und 6 bilden eine in sich stabile Einheit und fügen sich zu einem Maschinenrahmen zusammen.

Figur 5 zeigt eine schematische Darstellung einer aus Modulen 3 bis 19 aufgebauten Faservorbereitungsmaschine am Beispiel eines Mischers 32. Der Mischer weist einen Faserguteintritt 33 über welchen das Fasergut durch eine pneumatische Förderung in den Mischer 32 geführt wird. Der Innenraum des Mischers 32 ist durch Kammerwände 36 in mehrere Kammern unterteilt, welche das eintretende Fasergut aufnehmen. Die für den pneumatischen Transport benötigte Transportluft wird aus dem Mischer 32 über einen Transportluftaustritt 34 abgeführt. Über ein Transportband 37 unterhalb der Kammern wird das Fasergut aus den Kammern entnommen und einem Nadellattentuch 38 zugeführt. Das Nadellattentuch 38 welches sich endlos um eine Umlenkrolle 39 und eine Antriebswalze 41 spannt, transportiert das Fasergut zu einem Austrittskanal 42. Mit Hilfe einer Austragswalze 40 wird das Fasergut vom Nadellattentuch 38 abgenommen und über den Austrittskanal 42 zum Fasergutaustritt 35 geführt. Der Mischer 32 ist aus den Modulen 3 bis 19 aufgebaut, wobei die verschiedenen Einbauten wie beispielsweise Kammerwände 36, Transportband 37, Austrittskanal 42 auf die entsprechenden Module aufgeteilt sind. Die Module 3 bis 19 bilden den eigentlichen Maschinenrahmen des Mischers 32 zur Aufnahme der verschiedensten Ein- und Aufbauten. Die Verbindungen der Module 3 bis 19 sind derart ausgestaltet, dass keine weitere Verschalung oder Dichtelemente notwendig sind. Die Module 3, 4, 5 und 15 bilden den Unterbau des Mischers 32 und sind mit entsprechenden Elementen zur Aufstellung auf einem Fundament versehen (nicht gezeigt). Oberhalb der Module 3, 4 und 5 sind die Module 6 bis 13 angeordnet, welche mit den darin eingebauten Kammerwänden 36 die Mischkammern bilden. Die Kammerwände 36 dienen beispielsweise bei den Modulen 9 und 10 als Traversen, sodass keine weiteren Elemente zur Stabilisierung der Module 9 und 10 notwendig sind. Die Module 12 bis 14 bilden den oberen Abschluss des Mischers 32 und enthalten demnach ein Blech, welches den Abschluss des Mischers 32 durch die Bildung einer oberen Seitenwand bildet.

In der gezeigten Darstellung sind die Einfachheit der Montage durch die Ausbildung der Module als selbsttragende Elemente zu erkennen und auch die Möglichkeiten eines Ausbaus des Mischers 32 zu verstehen. Beispielsweise können zur Vergrösserung der Mischkammern zwischen die Module 9, 10 und die Module 12, 13 zwei weitere Module eingeschoben werden welche entsprechende Kammerwände 36 enthalten. Es ist keine Auftrennung des Maschinenrahmens notwendig. Einzig die Verbindung zwischen den Modulen 9 und 12 sowie zwischen 10 und 13 ist zu lösen und die neu eigefügten Module sind entsprechend mit den vorhandenen Modulen 9, 10 und 12, 13 zu verbinden. Auch kann durch ein Einschieben weiterer Module zwischen die Module 6, 7 und 9, 10 und 12, 13 eine weitere Mischkammer vorgesehen werden.

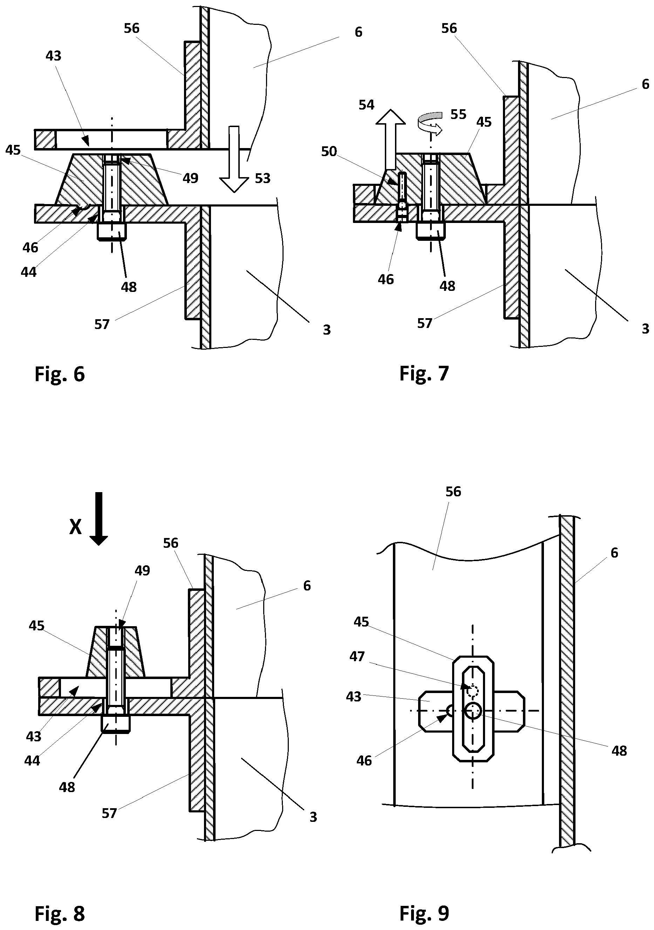

Figur 6 zeigt eine schematische Darstellung einer Modulverbindung in der Montagestellung. Ein erstes Modul 6 ist über einem zweiten Modul 3 in einem Abstand, welcher mindestens einer Höhe eines Verbindungselementes 45 entspricht, angeordnet. Das erste Modul 6 weist einen Rahmen 56 auf, welcher in seinem vom ersten Modul 6 abstehenden Schenkel eine Öffnung 43 aufweist. Das zweite Modul 3 weist einen Rahmen 57 auf, welcher in seinem vom zweiten Modul 3 abstehenden Schenkel ein Befestigungsloch 44 aufweist. Weiter weist der Rahmen des zweiten Moduls 3 neben dem Befestigungsloch 44 eine erste Positionierraste 46 auf. Am Rahmen 57 des zweiten Moduls 3 ist im Befestigungsloch 44 mit einem Gewindebolzen 48 das Verbindungselement 45 befestigt. Das Verbindungselement 45 hat ein zur ersten Positionierraste 46 des Rahmens 57 passendes Gegenstück, welches in der befestigten Position in die erste Positionierraste 46 eingreift. Ebenfalls hat das Verbindungselement 45 ein Innengewinde 49 in welches der Gewindebolzen 48 eingeschraubt ist. Das Verbindungselement 45 hat einen Querschnitt welcher sich ausgehend vom Rahmen 57 des zweiten Moduls 3 in Richtung des Rahmens 56 des ersten Moduls 6 verjüngt. Die Öffnung 43 im Rahmen 56 des ersten Moduls 6 entspricht der Dimension des Verbindungselements 45 an derjenigen Stelle, an welcher das Verbindungselement 45 am Rahmen 57 des zweiten Moduls 3 anliegt. Nachdem das erste Modul 6 über dem zweiten Modul 3 positioniert ist wird das erste Modul 6 in Richtung einer Montagebewegung 53 auf das zweite Modul 3 abgesenkt. Dabei wird das Verbindungselement 45 durch die Öffnung 43 geführt und das erste Modul 6 gleitet geführt durch die Formgebung des Verbindungselementes 45 in die exakte Position.

Figur 7 zeigt eine schematische Darstellung einer Modulverbindung im Übergang von einer Montagestellung in eine Betriebsstellung. Nach Ausführung der Montagebewegung 53 (siehe Figur 6) kommt der Rahmen 56 des ersten Moduls 6 auf dem Rahmen 57 des zweiten Moduls 3 zur Anlage. In der gezeigten Ausführung nach der Figur 7 ist die erste Positionsraste 46 durch eine Durchgansöffnung im Rahmen 57 des zweiten Moduls 3 gebildet. Am Verbindungselement 45 ist eine Positionierschraube 50 vorgesehen, deren Schraubenkopf in die Durchgangsöffnung respektive erste Positionsraste 46 eingreift. In der Folge wird der Gewindebolzen 48 gelöst und das Verbindungselement 45 angehoben in Pfeilrichtung 54. Nach dem Anheben des Verbindungselementes 45 über den Rahmen 56 des ersten Moduls 6 wird das Verbindungselement 45 in Pfeilrichtung 55 gedreht. Die Drehung 55 des Verbindungselementes 45 wird soweit geführt bis die Positionierschraube 50 in eine zweite Positionsraste 47 (siehe Figur 9) eingreift. Nach Festziehen des Gewindebolzens 48 ergibt sich die Betriebsstellung der Modulverbindung wie in den Figuren 8 und 9 dargestellt.

Figur 8 zeigt eine schematische Darstellung einer Modulverbindung in der Betriebsstellung und Figur 9 eine Draufsicht in Richtung X nach der Figur 8. Der Rahmen 56 des ersten Moduls 6 ist über das Verbindungselement 45 und den in das Innengewinde 49 des Verbindungselementes 45 eingreifenden und das Befestigungsloch 44 geführten Gewindebolzen 48 mit dem Rahmen 57 des zweiten Moduls 3 verspannt. In Figur 9 ist das Verbindungselement 45 mit einem rechteckigen Querschnitt gezeigt, welcher mit einem Querschnitt der Öffnung 43 im Rahmen 56 des ersten Moduls 6 übereinstimmt. Durch die Verdrehung des Verbindungselementes 45 kommt ein grosser Teil einer Auflagefläche des Verbindungselementes 45 mit dem Rahmen 56 des ersten Moduls 6 zur Anlage. Ebenfalls gezeigt sind um 90 Winkelgrade versetzt angeordnete erste Positionsraste 46 und zweite Positionsraste 47, welche einer einfachen Montage und definierten Positionierung des Verbindungselementes 45 bei dessen Befestigung mit dem Gewindebolzen 48 am Rahmen 57 des zweiten Moduls 3 respektive zur Verspannung der beiden Rahmen 56 und 57 dienen.

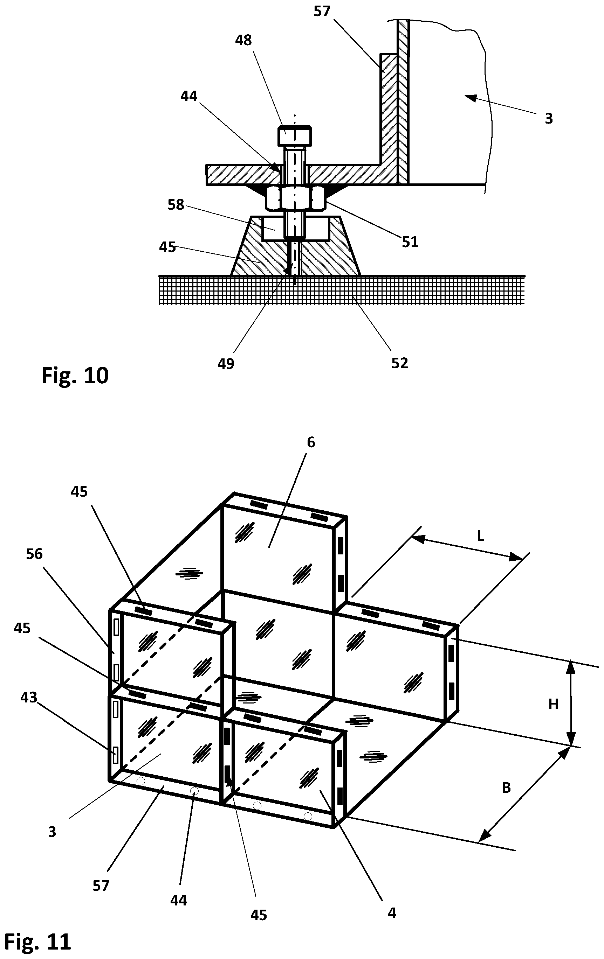

Figur 10 zeigt eine schematische Darstellung einer Modulaufstellung auf einem Fundament 52 mit einer Benutzung eines Verbindungselementes 45. Am Rahmen 57 des zweiten Moduls 3 ist gegen das Fundament 52 gerichtet eine Schweissmutter 51 zentrisch zu einem Befestigungsloch 44 vorgesehen, wobei die Schweissmutter 51 durch eine Schweissverbindung drehfest mit dem Rahmen 57 verbunden ist. Das Verbindungselement 45 wird auf einer dem zweiten Modul 3 abgewandten Seite, respektive auf einer dem Fundament 52 zugewandten Seite, des Rahmens 57 angeordnet. Dabei wird der Gewindebolzen 48 durch die Schweissmutter 51 in eine Vertiefung 58 im Verbindungselement 45 geführt. Durch diese Anlage des Verbindungselementes 45 kann die Höhe des Rahmens 57 gegenüber dem Fundament 52 auf einfache Weise eingestellt werden und die Verbindungselemente 45 können als Maschinenfüsse genutzt werden. Das im Verbindungselement 45 angeordnete Innengewinde 49 kommt dabei auf einer dem Fundament 52 zugewandten Seite des Verbindungselements 45 zu liegen, wodurch identische Verbindungselemente 45 für die Aufstellung auf einem Fundament 52 wie auch zur Verspannung der einzelnen Module 3 und 6 untereinander genutzt werden können. Die dargestellte Vertiefung 58 dient zur Aufnahme der Schweissmutter 51 bei einer tiefen Aufstellung wie auch zu Zentrierung des Gewindebolzens 48 in der Verwendung des Verbindungselementes 45 als Maschinenfuss. Die Vertiefung 58 ist in den Figuren 6 bis 9 nicht gezeigt kann jedoch ebenfalls vorhanden sein. Dies führt zu keinem Nachteil, da die Auflagefläche zwischen dem Verbindungselement 45 und dem Rahmen 56 des ersten Moduls 6 sich auf der der Vertiefung 58 abgewandten Seite des Verbindungselementes 45 befindet.

Figur 11 zeigt eine schematische Darstellung einer Zusammenstellung mehrerer Module, welche durch Verbindungselemente 45 zusammengehalten werden. Das erste Modul 6 ist oberhalb des zweiten Moduls 3 angeordnet. Seitlich neben dem zweiten Modul 3 ist ein drittes Modul 4 abgeordnet. Dabei ist der Rahmen 56 des ersten Moduls 6 mit dem Rahmen 57 des zweiten Moduls 3 und ein Rahmen des dritten Moduls 4 mit dem Rahmen 57 des zweiten Moduls 3 verbunden. Die Verbindungen sind dabei mit Verbindungselementen 45 realisiert mit derer die jeweiligen Rahmen gegeneinander verspannt sind. Weiter weist der Rahmen 57 des zweiten Moduls 3 Öffnungen 43 zur Befestigung weiterer Module und Befestigungslöcher 44 zur Befestigung von Verbindungselementen 45 in der Funktion von Maschinenfüssen auf. Die Module sind schematisch und ohne Einbauten oder Anbauten gezeigt, je nach Maschine werden in respektive an die Module unterschiedliche Aggregate und Apparate, beispielsweise Walzen, Antriebe, Führungsbleche, Sensoren usw. ein- respektive angebaut. Die Abmessungen der Module, also deren Breite B, Höhe H und Länge L werden vorteilhafterweise in der gleichen Grösse gewählt, jedoch derart, dass eine günstige Transportgrösse vorliegt. Die Modulbreite B entspricht vorteilhafterweise einer Arbeitsbreite der Maschine, wodurch die Seitenwände der Module gleichzeitig die seitliche Begrenzung der Maschine darstellen.

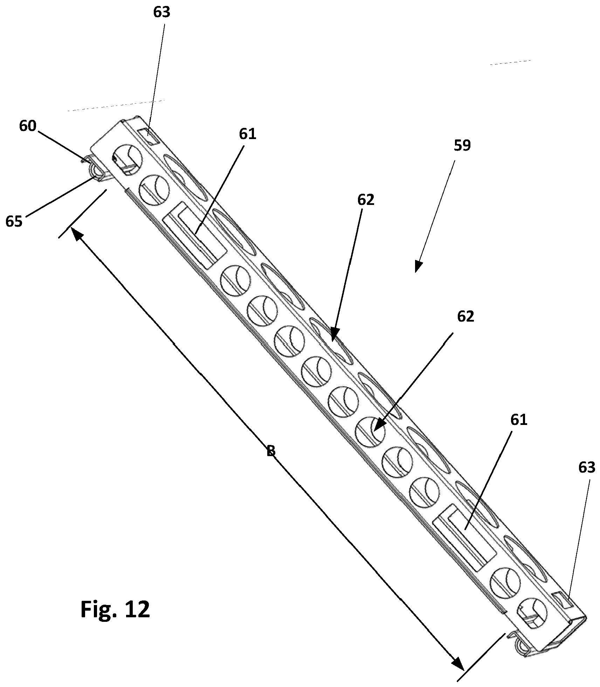

Figur 12 zeigt eine schematische Darstellung eines Hebebalkens 59. Der Hebebalken 59 überspannt die Breite B eines Moduls und wird an diesem mit zwei Platten 60 und Ringschrauben 65 befestigt. Dabei wird der Hebebalken 59 auf ein Modul aufgesetzt, sodass die Enden des Hebebalkens 59 auf den Rahmen des Moduls zu liegen kommen. Auf der dem Hebebalken 59 entgegengesetzten Seite des Schenkels des Rahmens auf welchem der Hebebalken 59 aufliegt wird die Platte 60 eingelegt und diese mit der Ringschraube 65 durch eine Öffnung im Rahmen mit dem Hebebalken 59 verschraubt. Im Hebebalken 59 sind zwei Aufnahmen 61 vorgesehen, welche für den Transport des Moduls mit einem Gabelstapler genutzt werden können. Ebenfalls können durch die Aufnahmen Schlingen oder Seile geführt werden für einen Transport des Moduls mit einem Kran. Für eine einfache manuelle Handhabung des Hebebalkens 59 allein ist an den jeweiligen Enden des Hebebalkens 59 jeweils ein Handgriff 63 vorgesehen. Damit kann der Hebebalken 59 manuell bewegt werden. Über die gesamte Länge des Hebebalkens 59 sind Aussparungen 62 angeordnet, welche einzig einer Gewichtsreduktion des Hebebalkens 59 dienen.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Legende

- 1-19: Modul
- 20: Erste Seitenwand
- 21: Rahmen erste Seitenwand
- 22: Zweite Seitenwand
- 23: Rahmen zweite Seitenwand
- 24: Erste Traverse
- 25: Zweite Traverse
- 26: Bodenblech
- 27: Rückwand
- 28: Erster Schenkel
- 29: Zweiter Schenkel
- 30: Rippe
- 31: Verbindung
- 32: Mischer
- 33: Faserguteintritt
- 34: Transportluftaustritt
- 35: Fasergutaustritt
- 36: Kammerwand
- 37: Transportband
- 38: Nadellattentuch
- 39: Umlenkrolle
- 40: Austragswalze
- 41: Antriebswalze
- 42: Austrittskanal
- 43: Öffnung
- 44: Befestigungsloch
- 45: Verbindungselement
- 46: Erste Positionsraste
- 47: Zweite Positionsraste
- 48: Gewindebolzen
- 49: Innengewinde
- 50: Positionierschraube
- 51: Schweissmutter
- 52: Fundament
- 53: Montagebewegung
- 54: Anheben Verbindungselement
- 55: Drehen Verbindungselement
- 56: Rahmen erstes Modul
- 57: Rahmen zweites Modul
- 58: Vertiefung
- 59: Hebebalken
- 60: Platte
- 61: Aufnahme
- 62: Aussparung
- 63: Handgriff
- 64: Dritter Schenkel
- 65: Ringschraube
- L: Länge des Moduls
- B: Breite des Moduls
- H: Höhe des Moduls

## Patentansprüche

1. Modul (1 - 19) für eine Faservorbereitungsmaschine wobei das Modul (1 - 19) quaderförmig ist und eine Länge (L), eine Breite (B) und eine Höhe (H) aufweist, **dadurch gekennzeichnet, dass** das Modul (1 - 19) als selbsttragendes Element ausgebildet ist und zumindest zwei in der Breite (B) beabstandete in jeweils einer Ebene angeordnete Seitenwände (20, 22) aufweist, welche durch zumindest eine Traverse (24, 25) miteinander verbunden sind, wobei die Ebenen der Seitenwände (20, 22) parallel zueinander angeordnet und die Seitenwände (20, 22) jeweils mit einem Rahmen (21, 23) umfasst sind, wobei ein erster Schenkel (28) des Rahmens (21, 23) in der Ebene der jeweiligen Seitenwand (20, 22) und ein zweiter Schenkel (29) des Rahmens (21, 23) jeweils rechtwinklig von der jeweils gegenüberliegenden Seitenwand (20, 22) weg weisend angeordnet sind.

2. Modul (1 - 19) nach Anspruch 1, **dadurch gekennzeichnet, dass** der Rahmen (21, 23) durch einen Flachstahl oder ein Winkeleisen oder ein U-Profil gebildet ist.

3. Modul (1 - 19) nach Anspruch 1 oder 2, **dadurch gekennzeichnet, dass** die zumindest eine Traverse (24, 25) durch ein Winkeleisen oder ein Rohr oder ein Blech (26, 27) oder eine Walze (39, 40) gebildet ist.

4. Modul (1 - 19) nach mindestens einem der vorangehenden Ansprüche, **dadurch gekennzeichnet, dass** das Modul (1 - 19) eine Breite (B) von 1200 bis 1800 mm aufweist.

5. Modul (1 - 19) nach mindestens einem der vorangehenden Ansprüche, **dadurch gekennzeichnet, dass** einander angrenzende Module (1 - 19) in der Breite (B) und in der Höhe (H) oder in der Breite (B) und in der Länge (L) gleich sind.

6. Modul (2 - 4) nach mindestens einem der Ansprüche 1 bis 4, **dadurch gekennzeichnet, dass** zur Verbesserung eines Faserflusses Module (6, 7, 9, 10) welche einen Schacht bilden in der Breite (B) 50 mm bis 100 mm schmaler sind als die angrenzenden Module (3, 4, 8, 11, 12, 13).

7. Modul (3, 6, 9) nach mindestens einem der vorangehenden Ansprüche, **dadurch gekennzeichnet, dass** das Modul (3, 6, 9) eine Rückwand (27) aufweist.

8. Modul (1 - 19) nach mindestens einem der vorangehenden Ansprüche, **dadurch gekennzeichnet, dass** der zweite Schenkel (29) des Rahmens (21, 23) staubdicht mit der jeweiligen Seitenwand (20, 22) verbunden ist.

9. Modul (1 - 19) nach mindestens einem der vorangehenden Ansprüche, **dadurch gekennzeichnet, dass** für einen Transport des Moduls (1-19) zumindest ein Hebebalken (59) vorgesehen ist, wobei am Hebebalken (59) Schnellverschlüsse (69) zur Befestigung des Hebebalkens (59) an den Rahmen des Moduls (1-19) angebracht und Aufnahmen (61) für eine Gabel eines Hubstaplers und/oder Gewindelöcher (62) für Ringschrauben vorgesehen sind.

10. Faservorbereitungsmaschine **dadurch gekennzeichnet, dass** die Faservorbereitungsmaschine aus einer Vielzahl von Modulen (1 - 19) nach einem der vorherigen Ansprüche aufgebaut ist, wobei die sich gegenüberliegenden zweiten Schenkel (29) der Rahmen (21, 23) der aneinander angrenzenden Module (1 - 19) jeweils miteinander verbunden sind.

11. Faservorbereitungsmaschine nach Anspruch 10, **dadurch gekennzeichnet, dass** eine Arbeitsbreite der Faservorbereitungsmaschine der Breite (B) eines Moduls entspricht.

12. Faservorbereitungsmaschine nach Anspruch 10 oder 11, **dadurch gekennzeichnet, dass** die Verbindung eine Klemmverbindung oder eine Schraubverbindung oder eine Schweissverbindung ist.

13. Faservorbereitungsmaschine nach Anspruch 12, **dadurch gekennzeichnet, dass** die Klemmverbindung clipsartig mit verrastenden Verbindungselementen ausgebildet ist.

14. Faservorbereitungsmaschine nach einem der Ansprüche 10 bis 13, **dadurch gekennzeichnet, dass** die Verbindung zwischen den zweiten Schenkeln (29) der Rahmen (21, 23) der aneinander angrenzenden Module (1 - 19) mit einer Dichtung versehen ist.

15. Faservorbereitungsmaschine nach einem der Ansprüche 10 oder 11, **dadurch gekennzeichnet, dass** für die Verbindung eine Vorrichtung mit Verbindungselementen (45) zur Verbindung und Positionierung der Module vorgesehen ist, wobei ein erstes Modul (6) in seinem Rahmen (56) eine Öffnung (43) zur Aufnahme eines Verbindungselements (45) aufweist und ein zweites Modul (3) in seinem Rahmen (57) ein Befestigungsloch (44) sowie zwei um das Befestigungsloch (44) um mindestens 45 Winkelgrade zueinander versetzte Positionierrasten (46, 47) aufweist, wobei in einer Montagestellung das Verbindungselement (45) in einer ersten Position in der ersten Positionierraste (46) mit dem zweiten Modul (3) im Befestigungsloch (44) drehfest verschraubt ist und in einer Betriebsstellung das Verbindungselement (45) in einer zweiten Position in der zweiten Positionierraste (47) mit dem zweiten Modul (3) im Befestigungsloch (44) drehfest verschraubt ist, wobei in der Betriebsstellung das erste Modul (6) mit dem zweiten Modul (3) verbunden ist durch eine Verspannung des Rahmens (56) des ersten Moduls (6) zwischen dem Verbindungselement (44) und dem Rahmen (57) des zweiten Moduls (3).
